# EUROPEAN PATENT SPECIFICATION

(11) **EP 3 217 245 B1**
(45) Date of publication and mention of the grant of the patent: **06.04.2022**
(21) Application number: 16159764.6
(22) Date of filing: 11.03.2016
(51) Int. Cl.: G05D 23/19, F24F 110/10, F24F 11/30

(54) **THERMOSTATIC DEVICE**
THERMOSTAT
DISPOSITIF THERMOSTATIQUE

(43) Date of publication of application: 13.09.2017
(73) Proprietor: Danfoss A/S, 6430 Nordborg (DK)
(72) Inventor: Frederiksen, Bjarne, 8632 Lemming (DK)
(74) Representative: Patentanwälte Olbricht Buchhold Keulertz

(56) References cited:
- EP-A2- 1 879 090
- WO-A1-2012/068503
- US-A1- 2010 006 660
- US-A1- 2015 276 238
- Salus Controls ET AL: "Digital programmable wireless 4 in 1 thermostat and Wireless Radiator Controller", Salus House, Dodworth Business Park South, Whinby Road, Dodworth, Barnsley S7535P,UK, 1 December 2014 (2014-12-01), XP055733229, Retrieved from the Internet: URL:https://salus-controls.com/files/TRV10 RFM-Quick-Guide-V030.pdf [retrieved on 2020-09-23]

## Description

The present invention relates to a thermostat device comprising a housing, a handle mounted rotatably on said housing, communication means of a wireless communication path and signaling means, wherein said communication means are operatively connected to said signaling means to activate said signaling means in case said communication means indicate that said communication path has been established.

Such a device is known from WO 2012/068503 A1 showing a user friendly interface for a control unit. This interface can be controlled by only two types of user input, the first being a rotation of an outer ring and the second being an inward push on an outer cap. Furthermore, control unit can be connected to the internet via a wireless connection. Once the connection is established, an icon and a message are displayed on a display.

A similar disclosure can be found in US 2015/0276238 A1.

A further thermostat device is known, for example, from EP 2 157 492 A1.

Such a thermostat device can be used directly in connection with a valve of a heat exchanger, for example a radiator valve. It is possible as well to use such a thermostat device remotely from a heat exchanger. in this case the thermostat device detects a temperature of a room and outputs signals which can be used to actuate a heat exchanger valve.

In the last years such thermostat devices have been developed to be programmable from the outside. A user can, for example, define temperatures for certain hours of a day individually for a respective heat exchanger. In this way it is possible to have a comfortable feeling and to save energy at the same time.

When the programming is made via a wireless communication path, for example a Bluetooth communication system, a communication path between the thermostat device and an external programming device must be established. If the communication path is not built up as it should be, the programming is not possible or the programming has the risk of faults. When the energy consumption of the thermostat device and of the external device should be kept low, a critical parameter is, for example, the distance between the external device and the thermostat device. If the external device is too far away from the thermostat device, for example, it cannot be guaranteed that all data and program information is transmitted reliably to the thermostat device.

US 2010/0006660 A1 shows a back-up control for HVAC system, in which an interface module can be connected to a thermostat by means of a wireless connection. When the connection is established, a wireless status light can be switched on.

EP 1 879 090 A2 shows a thermostat with adjustable color for aesthetics and readability. This thermostat is equipped with three-color LEDs so that a number of different colors can be produced.

The object underlying the invention is minimizing the risk of a pure wireless communication path.

This object is solved with a thermostat device as described at the outset in that signaling means are light emitting means, and the other end of the communication path is formed by a smartphone, laptop, a tablet computer or the like with which a user can program the thermostat device.

In this way the user gets a reliable information about the wireless communication path. The signaling means give back a corresponding signal to the user only if the "receiving part", i.e. the thermostat device confirms that the end point of the wireless communication path is ready to receive and, if necessary, transmit information to the external device by which the user performs the programming of the thermostat device. This is a more reliable way than just signaling the state of the communication path via the external device. This signal is external to the external device.

Preferably said signaling means are light emitting means. Light emitting means can be switched on to indicate a condition in which the communication path has been fully established. When the light is on, the user knows that the communication path is in order. When the light is off, the user knows that he has to change something to establish the communication path.

Preferably light emitted by said light emitting means is visible from a front side of said housing. The front side of the housing is usually visibly accessible for a user. An additional advantage of this feature is that other parts of the housing can be used to indicate other information, for example a set-point temperature.

Said light emitting means produce a ring of light on said front side. The light visible for the user extends therefore over a quite large area which facilitates the recognition of the light.

A handle is mounted rotatably on said housing, said ring being located between said handle and a stationary part of said housing. The use of a rotatably handle is a comfortable way to adjust the set-point temperature of the thermostat device. Most users are familiar with the use of a rotary handle to adjust the set-point temperature. It is now possible to use the constructional features of the thermostat device to indicate that the communication path has been established without using additional elements.

Said handle is cup-shaped. A cup-shaped handle extends over a certain distance in a direction parallel to a rotational axis of the handle. This increases the feeling of comfort for a user, at the same time makes it possible to accommodate functional parts of the thermostat device within the handle. Among others, the signaling means can be positioned within said handle.

Preferably said light emitting means are located behind said stationary part, wherein light guiding means are arranged between said light emitting means and said front side. The stationary part can, for example, bear a logo of the producer of the thermostat device. This logo bearing stationary part is not rotated. The ring of light between the handle and the stationary part can be produced by a single light emitting means since it is possible to guide the light by means of the light guiding means to a gap between the handle and the stationary part.

Preferably said light emitting means are in form of light emitting diode. A light emitting diode (LED) produces enough light with a rather low energy consumption.

Preferably cover means are located between said light emitting means and said front side, said light guiding means penetrating said cover means. It is a simple way to reliably limit the light which is visible from the outside to certain predetermined areas of the thermostat device.

Preferably a gap is formed between said stationary part and said handle, said cover means extending at least to a distance from said light emitting means which is greater than a distance between said gap and said light emitting means. In this way it is possible to precisely direct the light to the gap between the stationary part and the handle. This gap can be open. It can, however, be filled with a transparent filling.

Preferably said cover means have a reflecting surface on a side directed towards said front face. The reflecting surface reflects light which otherwise would be directed towards the inside of the handle. In this way, the energy consumption of the light emitting means can be kept low while producing an image, for example, a ring, which is visible by the user.

A preferred embodiment of the invention will now be described in more detail with reference to the drawing, wherein:
- Fig. 1: is a sectional view through a thermostat device, and
- Fig. 2: is a perspective view of the thermostat device.

A thermostat device 1 comprises a housing 2 which is connected to a fixing geometry 3 with which it can be connected to a radiator valve, for example.

A rotary handle 4 is mounted on the housing 2. The handle can be rotated in order to adjust a set-point temperature. The housing 2 comprises a display 5, in which the set-point temperature can be shown.

The thermostat device 1 comprises an electric motor, preferably a step motor, which is arranged in housing 2. Also batteries are placed inside housing 2. The display 5 can show other information as just the mentioned set-point temperature.

The rotary handle 4 is, however, not the only means for adjusting or programming the thermostat device. The thermostat device furthermore comprises communication means 6 which form an end point of a wireless communication path. The communication means is connected (not shown) to a microprocessor or can incorporate the microprocessor or can be part of a microprocessor, wherein the microprocessor controls the thermostat device in a programmed manner. The communication means 6 can be used to receive instructions and data relating to such a program.

The communication means 6 are operatively connected to signaling means 7 in form of a LED 8 (or any other light emitting means). The communication means 6 activate the signaling means 7 as soon and as long the communication path is established.

Such a communication path can be formed, for example, as a Bluetooth communication system, for example low power Bluetooth. The other end of the communication path is formed, for example, by a smartphone, a laptop, a tablet computer or the like with which a user can program the thermostat device 1.

When the signaling means 7 are active, i.e. when the LED 8 is switched on, the user can see that the communication path has been established and that he is able to transmit data and programs to the thermostat device. He is able to check, for example, whether he is close enough to the thermostat device 1 when he wishes to transmit data and programs to the thermostat device.

The thermostat device 1 comprises a front side 9. A stationary part 10 is mounted unrotatably to the housing 2 so that a logo 11 printed or fixed to the stationary part 10 is always in the same orientation.

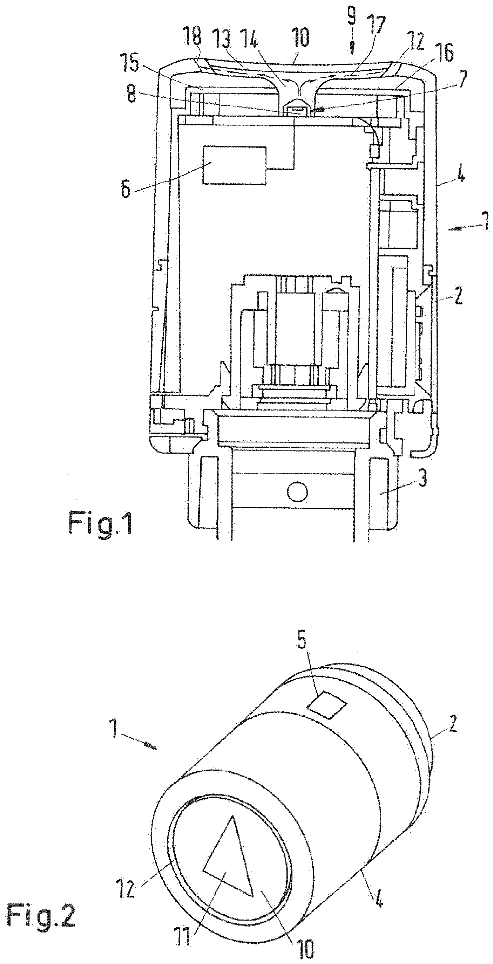

The handle 4 can be rotated with respect to the stationary part 10. A gap 12 is provided between the stationary part 10 and the handle 4. In the embodiment shown in Fig. 1 this gap 12 is open. However, it can be filled with a plastic material which is, however, transparent for light.

The stationary part 10 comprises a light proof disk 13 and light guiding means 14 guiding light from the LED 8 to the gap 12 which is of ring form. The disc 13 should be so thick that the light cannot pass this disc 13. Another possibility is to omit the disc 13 and to just apply some coating.

Arrows 17 show how the light is guided from the LED 8 to gap 12. The radially outer most side 18 of gap 12 is inclined outwardly. This side 18 can have a reflecting surface so that the light from the LED 8 is directed to the front side of housing 2.

Cover means 15 are provided between the light proof disk 13 and LED 8. However, the light guiding means 14 penetrate the cover means 15 to guide the light emitted from LED 8 to gap 12. Cover means 15 are coated with a reflecting surface 16 so that light which is emitted from light guiding means 14 into the interior of the handle 4 is reflected to gap 12.

Such a thermostat device makes it very easy to see when there is a connection between the thermostat device 1 and an external device like a smartphone (with an app turned on). As soon as there is a connection, i.e. a wireless communication path, LED 8 is turned on and an illuminated ring is visible in gap 12.

To direct as much light as possible towards said front side 9 the cover means 15 extend as far as possible radially outwardly. It extends at least to a distance from said LED 8 which is greater than a distance between the gap 12 and the LED 8. In other words, when viewed from the front side 9 in a direction parallel to a rotating axis of handle 4, the cover means 15 are at least located behind gap 12.

The handle 4 is cup-shaped. This gives a comfortable feeling for a using turning the handle 4. Furthermore, the handle 4 encloses the part of the interior of housing 2 in which functional parts of a thermostat device 1 can be accommodated.

Instead of a ring described above it is also possible to use a light spot or a company logo that could be illuminated.

It is possible that a light ring (or any other form of light) could flash when someone is approaching the thermostat device and then, when it is possible to program the thermostat device 1 be a steady light (or a two colored LED flashing red when approaching and flashing or steady light in green when ready for programming). After the steady light it is then possible for the user to "go back" and to do the programming. The important thing is that the app on the external device and the thermostat device 1 are synchronized so that if one has done something in the app this is received from the thermostat device 1, for example with a short flash.

It is also possible that a light sensor in the external device, for example a smartphone, knowing for example if it is dark could communicate this to the thermostat device 1 so that the light from the thermostat device 1 would also be dimmed if it is dark.

## Claims

1. Thermostat device (1) comprising a housing (2), communication means (6) of a wireless communication path and signaling means (7), wherein said communication means (6) are operatively connected to said signaling means (7) to activate said signaling means (7) in case said communication means (6) indicate that said communication path has been established, **characterized in that** said signaling means (7) are light emitting means, that the other end of the communication path is formed by a smartphone, a laptop, a tablet computer or the like with which a user can program the thermostat device (1), that light emitted by said light emitting means is visible from a front side (9) of said housing (2), that said light emitting means produce a ring of light on said front side (9) and that a handle (4) is mounted rotatably on said housing (2), said ring being located between said handle (4) and a stationary part (10) of said housing.

2. Thermostat device according to claim 1, **characterized in that** said handle (4) is cup-shaped.

3. Thermostat device according to claim 1 or 2, **characterized in that** said light emitting means are located behind said stationary part (10), wherein light guiding means (14) are arranged between said light emitting means and said front side (9).

4. Thermostat device according to claim 3, **characterized in that** said light emitting means are in form of a light emitting diode (8).

5. Thermostat device according to claim 3 or 4, **characterized in that** cover means (15) are located between said light emitting means and said front side (9), said light guiding means (14) penetrating said cover means (15).

6. Thermostat device according to claim 5, **characterized in that** a gap (12) is formed between said stationary part (10) and said handle (4), said cover means (15) extending at least to a distance from said light emitting means which is greater than a distance between said gap (12) and said light emitting means.

7. Thermostat device according to claim 5, **characterized in that** said cover means (15) have a reflecting surface (16) on a side directed towards said front face.

## Patentansprüche

1. Thermostatvorrichtung (1), die ein Gehäuse (2), Kommunikationsmittel (6) eines drahtlosen Kommunikationswegs und Signalgebungsmittel (7) umfasst, wobei die Kommunikationsmittel (6) mit den Signalgebungsmitteln (7) wirkverbunden sind, um die Signalgebungsmittel (7) zu aktivieren, falls die Kommunikationsmittel (6) anzeigen, dass der Kommunikationsweg hergestellt wurde, **dadurch gekennzeichnet, dass** die Signalgebungsmittel (7) lichtemittierende Mittel sind, dass das andere Ende des Kommunikationswegs durch ein Smartphone, einen Laptop, einen Tablet-Computer oder dergleichen gebildet ist, mit dem ein Benutzer die Thermostatvorrichtung (1) programmieren kann, dass durch die lichtemittierenden Mittel emittiertes Licht von einer Vorderseite (9) des Gehäuses (2) sichtbar ist, dass die lichtemittierenden Mittel einen Ring aus Licht an der Vorderseite (9) erzeugen und dass ein Griff (4) drehbar an dem Gehäuse (2) montiert ist, wobei der Ring zwischen dem Griff (4) und einem feststehenden Teil (10) des Gehäuses angeordnet ist.

2. Thermostatvorrichtung nach Anspruch 1, **dadurch gekennzeichnet, dass** der Griff (4) becherförmig ist.

3. Thermostatvorrichtung nach Anspruch 1 oder 2, **dadurch gekennzeichnet, dass** die lichtemittierenden Mittel hinter dem feststehenden Teil (10) angeordnet sind, wobei Lichtleitmittel (14) zwischen den lichtemittierenden Mitteln und der Vorderseite (9) angeordnet sind.

4. Thermostatvorrichtung nach Anspruch 3, **dadurch gekennzeichnet, dass** die lichtemittierenden Mittel in Form einer Leuchtdiode (8) sind.

5. Thermostatvorrichtung nach Anspruch 3 oder 4, **dadurch gekennzeichnet, dass** Abdeckmittel (15) zwischen den lichtemittierenden Mitteln und der Vorderseite (9) angeordnet sind, wobei die Lichtleitmittel (14) die Abdeckmittel (15) durchdringen.

6. Thermostatvorrichtung nach Anspruch 5, **dadurch gekennzeichnet, dass** ein Spalt (12) zwischen dem feststehenden Teil (10) und dem Griff (4) gebildet ist, wobei sich die Abdeckmittel (15) mindestens zu einer Distanz von den lichtemittierenden Mitteln erstrecken, die größer ist als eine Distanz zwischen dem Spalt (12) und den lichtemittierenden Mitteln.

7. Thermostatvorrichtung nach Anspruch 5, **dadurch gekennzeichnet, dass** die Abdeckmittel (15) eine reflektierende Oberfläche (16) auf einer Seite aufweisen, die der Vorderseite zugewandt ist.

## Revendications

1. Dispositif (1) de thermostat comportant un boîtier (2), des moyens (6) de communication d'un trajet de communication sans fil et des moyens (7) de signalisation, lesdits moyens (6) de communication étant reliée fonctionnellement auxdits moyens (7) de signalisation pour activer lesdits moyens (7) de signalisation dans le cas où lesdits moyens (6) de communication indiquent que ledit trajet de communication a été établi, **caractérisé en ce que** lesdits moyens (7) de signalisation sont des moyens d'émission lumineuse, **en ce que** l'autre extrémité du trajet de communication est formée par un ordiphone, un ordinateur portable, une tablette informatique ou similaire à l'aide desquels un utilisateur peut programmer le dispositif (1) de thermostat, **en ce qu'**une lumière émise par lesdits moyens d'émission lumineuse est visible depuis un côté avant (9) dudit boîtier (2), **en ce que** lesdits moyens d'émission lumineuse produisent un anneau de lumière sur ledit côté avant (9) et **en ce qu'**une poignée (4) est montée de façon pivotante sur ledit boîtier (2), ledit anneau étant situé entre ladite poignée (4) et une partie fixe (10) dudit boîtier.

2. Dispositif de thermostat selon la revendication 1, **caractérisé en ce que** ladite poignée (4) est en forme de gobelet.

3. Dispositif de thermostat selon la revendication 1 ou 2, **caractérisé en ce que** lesdits moyens d'émission lumineuse sont située derrière ladite partie fixe (10), des moyens (14) de guidage de lumière étant disposés entre lesdits moyens d'émission lumineuse et ledit côté avant (9).

4. Dispositif de thermostat selon la revendication 3, **caractérisé en ce que** lesdits moyens d'émission lumineuse se présentent sous la forme d'une diode électroluminescente (8).

5. Dispositif de thermostat selon la revendication 3 ou 4, **caractérisé en ce que** des moyens (15) de couverture sont situés entre lesdits moyens d'émission lumineuse et ledit côté avant (9), lesdits moyens (14) de guidage de lumière traversant lesdits moyens (15) de couverture.

6. Dispositif de thermostat selon la revendication 5, **caractérisé en ce qu'**un interstice (12) est formé entre ladite partie fixe (10) et ladite poignée (4), lesdits moyens (15) de couverture s'étendant au moins jusqu'à une distance desdits moyens d'émission lumineuse qui est supérieure à une distance entre ledit interstice (12) et lesdits moyens d'émission lumineuse.

7. Dispositif de thermostat selon la revendication 5, **caractérisé en ce que** lesdits moyens (15) de couverture présentent une surface réfléchissante (16) sur un côté orienté vers ladite face avant.
